# EUROPEAN PATENT APPLICATION

(11) **EP 4 529 314 A1**
(43) Date of publication of application: **26.03.2025**
(21) Application number: 23806865.4
(22) Date of filing: 15.05.2023
(51) Int. Cl.: H04W 72/04, H04W 48/12

(54) **METHOD FOR INDICATING TCI STATE AND RELATED DEVICE**

(30) Priority: 16.05.2022 CN 202210527398
(71) Applicant: Sony Group Corporation, Tokyo 108-0075 (JP)
(72) Inventor: SHENG, Yuxiang, Beijing 100027 (CN); CAO, Jianfei, Beijing 100027 (CN); XU, Jin, Beijing 100027 (CN)
(74) Representative: D Young & Co LLP
(86) International application number: PCT/CN2023/094143
(87) International publication number: WO 2023/221913

(57) **Abstract**

Methods for indicating of TCI states and related devices are disclosed. The method comprises: indicating, respectively, a first TCI state and a second TCI state that are different from each other for a first signal transmission and a second signal transmission associated with a TRP, wherein the first signal transmission and the second signal transmission have different signal types or experience different channel conditions.

## Description

### CLAIM OF PRIORITY

This application claims priority to Chinese patent application with application number 202210527398.9, titled "METHOD FOR INDICATING TCI STATES AND RELATED DEVICE", filed on May 16, 2022, the entire content of which is incorporated herein by reference.

### TECHNICAL FIELD

The present disclosure relates to a field of wireless communication, and in particular, to methods for indicating transmission configuration indication (TCI) states and related devices.

### BACKGROUND

A wireless communication system may use a plurality of antennas to transmit a plurality of beams. In such a system, a device at network side (e.g., a base station or a transmission and reception point (TRP)) sends quasi co-located (QCL) information to a user equipment (UE) through a TCI state. If two signals are quasi co-located with respect to QCL type D, the two signals may be transmitted with a same beam. Therefore, a beam used to perform a transmission may be indicated through indication of the TCI state.

Conventionally, one TRP can activate only one TCI state at one time, thereby indicating only one common beam. However, many signals may be used for different functions. Using a same common beam may not be adequate for implementation of specific functions of these different signals. Moreover, only one common beam is obviously not enough if diversity or multiplexing technology is adopted. In addition, a single common beam is not suitable for scenarios associated with multiple TRPs.

### SUMMARY

The present disclosure provides a unified TCI state design scheme for multi-beam operations. The scheme may indicate different TCI states for different types of signals. Additionally, the scheme may also indicate different TCI states for signals that are of a same type but experience different channels. In addition, the scheme has been specifically designed for two communication scenarios (a single TRP scenario or a multi-TRP scenario). More specifically, communication examples targeted by the scheme include but are not limited to: simultaneous transmissions of a control signal and a data signal; simultaneous transmissions of a control signal and a pilot signal; simultaneous transmissions of a control signal, a data signal and a feedback signal; diversity transmission of a control signal; spatial multiplexing of a data signal; coordinated transmission of control signals under multiple TRPs; separate transmissions of control signals under multiple TRPs, and feedback signals under multiple TRPs, etc.

One aspect of the present disclosure relates to an electronic device used at network side, the electronic device comprising processing circuitry configured to: indicate a first TCI state for a first signal transmission that is associated with a TRP; indicate a second TCI state for a second signal transmission that is associated with the TRP; wherein the first signal transmission and the second signal transmission have different signal types or experience different channel conditions, and the first TCI state is different from the second TCI state.

Another aspect of the present disclosure relates to a method performed at network side, the method comprising: indicating a first TCI state for a first signal transmission that is associated with a TRP; indicating a second TCI state for a second signal transmission that is associated with the TRP; wherein the first signal transmission and the second signal transmission have different signal types or experience different channel conditions, and the first TCI state is different from the second TCI state.

Another aspect of the present disclosure relates to a computer-readable storage medium having one or more instructions stored thereon, which, when executed by one or more processing circuits of an electronic device, cause the electronic device to perform any of the methods described in the present disclosure.

Another aspect of the present disclosure relates to a computer program product comprising a computer program which, when executed by a processor, implements any of the methods described in present disclosure.

Another aspect of the present disclosure relates to an apparatus comprising means for performing any of the methods described in the present disclosure.

### BRIEF DESCRIPTION OF THE DRAWINGS

The above and other purposes and advantages of the present disclosure will be further described below in conjunction with specific embodiments and with reference to the accompanying drawings. In the drawings, same or corresponding technical features or components are indicated by same or corresponding reference numerals.
FIG. 1 illustrates an exemplary block diagram of an electronic device according to an embodiment of the present disclosure.
FIG. 2 illustrates an exemplary flow chart of a method according to an embodiment of the present disclosure.
FIG. 3A illustrates a beam scheme for a first signal transmission and a second signal transmission according to an embodiment of the present disclosure.
FIG. 3B illustrates a beam scheme for a first signal transmission, a second signal transmission, and a third signal transmission according to an embodiment of the present disclosure.
FIG. 4A illustrates a schematic sequence diagram for a physical downlink control channel (PDCCH) transmission and a physical downlink shared channel (PDSCH) transmission according to an embodiment of the present disclosure.
FIG. 4B illustrates a schematic sequence diagram for a PDCCH transmission and an aperiodic channel state information reference signal (Ap-CSI-RS) transmission according to an embodiment of the present disclosure.
FIG. 5A illustrates a schematic diagram of a spatial diversity transmission according to an embodiment of the present disclosure.
FIG. 5B illustrates a schematic diagram of data channel spatial multiplexing according to an embodiment of the present disclosure.
FIGS. 6A-6D illustrate embodiments of multi-TRP scenarios according to embodiments of the present disclosure.
FIG. 7 is a block diagram illustrating a first example of a schematic configuration of a gNB to which the technology of the present disclosure may be applied.
FIG. 8 is a block diagram illustrating a second example of a schematic configuration of a gNB to which the technology of the present disclosure may be applied.
FIG. 9 is a block diagram illustrating an example of a schematic configuration of a communication device to which the technology of the present disclosure may be applied.
FIG. 10 is a block diagram illustrating an example of a schematic configuration of a vehicle navigation device to which the technology of the present disclosure may be applied.

While the embodiments described in the present disclosure may be susceptible to various modifications and alternative forms, specific embodiments thereof are shown by way of example in the drawings and described in detail herein. It should be understood, however, that the drawings and detailed description are not intended to limit the embodiments to the particular forms disclosed, but on the contrary, the intention is to cover all modifications, equivalents and alternatives that fall within the spirit and scope of the claims.

### DETAILED DESCRIPTION

Exemplary embodiments of the present disclosure are described below with reference to the accompanying drawings. For the sake of clarity and conciseness, not all features of the embodiments are described in the disclosure. It should be understood, however, that many implementation-specific settings must be made in implementing an embodiment in order to achieve the developer's specific goals, for example, to meet those constraints associated with the device and business, and that these constraints may vary from one implementation to another. Moreover, it should also be understood that development work, while potentially complex and time-consuming, would only be a routine undertaking for those skilled in the art having the benefit of the present disclosure.

Here, it should also be noted that, in order to avoid obscuring the present disclosure with unnecessary details, only the processing steps and/or device structures that are closely related to at least the solution according to the present disclosure are shown in the drawings, while other details that are of little relevance to the present disclosure are omitted.

### 1. EXEMPLARY DEVICE(S)

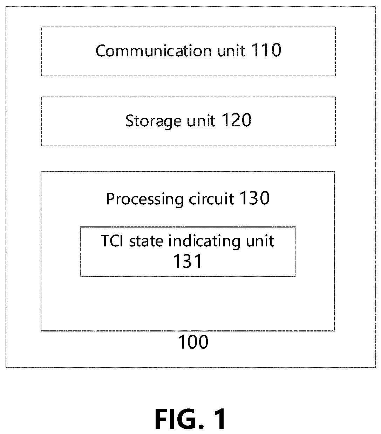

FIG. 1 illustrates an exemplary block diagram of an electronic device 100 according to an embodiment of the present disclosure. The electronic device 100 may include a communication unit 110, a storage unit 120, and a processing circuit 130.

The electronic device 100 may be used to implement a method for indicating a TCI state described in the present disclosure. The method may be performed at network side of a wireless communication system. Therefore, the electronic device 100 may be implemented at network side. The electronic device 100 may be used to perform one or more operations related to a TRP described herein. Specifically, the electronic device 100 may be implemented as the TRP itself, as a part of the TRP, or as a control device for controlling the TRP. For example, the electronic device 100 may be implemented as a chip for controlling the TRP. As described herein, the electronic device 100 is implemented as the TRP itself, which is merely for convenience of description and is not intended to be limiting.

The communication unit 110 of the electronic device 100 may be used to receive or send radio transmissions. The communication unit 110 may be used to establish and maintain one or more communication links. Each of the communication links may carry associated transmissions. In an embodiment of the present disclosure, the communication unit 110 may perform functions such as up-conversion, digital-to-analog conversion on sent radio signals, and/or perform functions such as down-conversion, analog-to-digital conversion on received radio signals. Various technologies may be used to implement the communication unit 110. For example, the communication unit 110 may be implemented as a communication interface component, such as an antenna device, a radio frequency circuit, and a part of a baseband processing circuit. In FIG. 1, the communication unit 110 is drawn with dashed lines, as it may be alternatively located in the processing circuit 130 or external to the electronic device 100.

The storage unit 120 of the electronic device 100 may store information generated by the processing circuit 130, information received from or sent to other devices through the communication unit 110, programs, machine codes and data for operations of the electronic device 100, and the like. The storage unit 120 may be a volatile memory and/or a non-volatile memory. For example, the storage unit 120 may include, but is not limited to, a random access memory (RAM), a dynamic random access memory (DRAM), a static random access memory (SRAM), a read-only memory (ROM), and a flash memory. The storage unit 120 is drawn with dashed lines, as it may be alternatively located within the processing circuit 130 or external to the electronic device 100.

The processing circuit 130 of the electronic device 100 may be configured to perform one or more operations, thereby providing various functions of the electronic device 100. The processing circuit 130 may perform corresponding operations by executing one or more executable instructions stored in the storage unit 120.

According to an embodiment of the present disclosure, the processing circuit 130 may perform one or more operations to implement the method(s) described herein. To this end, the processing circuit 130 may include a TCI state indicating unit 131. The TCI state indicating unit 131 may be configured to indicate a first TCI state for a first signal transmission that is associated with a TRP, and to indicate a second TCI state for a second signal transmission that is associated with the TRP. The first signal transmission and the second signal transmission may have different signal types or may experience different channel conditions. In some embodiments, the first signal transmission and the second signal transmission may be associated with a plurality of signals that are of different types and have different purposes or functions. In other embodiments, the first signal transmission and the second signal transmission may be associated with a plurality of signals that are of a same type but experience different channels. The first TCI state indicated by the TCI state indicating unit 131 for the first signal transmission may be different from the second TCI state indicated for the first signal transmission. Accordingly, a transmit/receive beam used for the first signal transmission may be different from a transmit/receive beam used for the second signal transmission. Various functions and steps performed by the processing circuit 130 of the electronic device 100 will be further described below in conjunction with various embodiments.

It should be noted that the various units described above are exemplary and/or preferred modules for implementing the processes described in the present disclosure. These modules may be hardware units (such as central processing units, field programmable gate arrays, digital signal processors or application specific integrated circuits, etc.) and/or software modules (such as computer readable programs). The above content is not exhaustive description of modules used for implementing various steps described below. As long as there is a step for performing a certain process, there might be a corresponding module or unit (implemented by hardware and/or software) for implementing that process. Technical solutions defined by all combinations of steps described below and units corresponding to those steps are included in the content of the present disclosure, as long as the technical solutions they constitute are complete and applicable.

Furthermore, a device constituted by various units may be incorporated into a hardware device (such as a computer) as a functional module. In addition to those functional modules, the electronic device may of course have other hardware or software components.

### 2. EXEMPLARY METHOD(S)

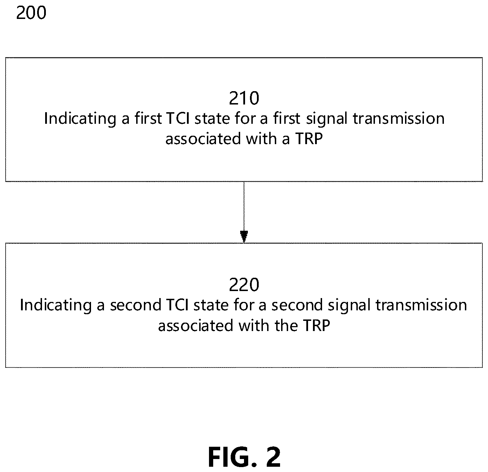

FIG. 2 illustrates an exemplary flow chart of a method 200 according to an embodiment of the present disclosure. The method 200 may be performed by a device at network side. The device at network side may include a TRP itself, a part of the TRP, or a control device for controlling the TRP. As described herein, a TRP may be used interchangeably with a base station, for example. When the electronic device 100 is used to implement the device at network side described in the present disclosure, the method 200 may be performed by the processing circuit 130 of the electronic device 100. As described herein, the method 200 is described as being performed by the TRP itself, which is merely for the convenience of description and is not intended to be limiting.

According to an embodiment of the present disclosure, the method 200 may start from step 210. In step 210, a TRP may be configured to indicate a first TCI state for a first signal transmission associated with the TRP. Subsequently, in step 220, the TRP may be configured to indicate a second TCI state for a second signal transmission associated with the TRP. The first signal transmission and the second signal transmission may have different signal types. Alternatively, the first signal transmission and the second signal transmission may experience different channel conditions. The first TCI state indicated for the first signal transmission may be different from the second TCI state indicated for the first signal transmission.

According to an embodiment of the present disclosure, the different TCI states associated with the first signal transmission and the second signal transmission may be indicated via signaling (e.g., MAC CE and/or DCI) of the TRP. In a preferred embodiment, for a plurality of TCI states (e.g., the first TCI state, the second TCI state, or other TCI states described later), a single group of signaling may be used to indicate the plurality of TCI states at one time.

The method 200 may be performed in response to various situations. In some embodiments, the method 200 may be performed in response to the first signal transmission and the second signal transmission being associated with a plurality of signals of different types (which have different purposes or functions). For example, the first signal transmission may be associated with a control signal, while the second signal transmission may be associated with a data signal or a pilot signal. The TRP may decide to perform the method 200 for such first signal transmission and second signal transmission.

In an alternative embodiment, the method 200 may be performed in response to the first signal transmission and the second signal transmission being associated with a plurality of signals of the same type that experience different channels. In one example, the first signal transmission and the second signal transmission may be used for diversity transmission of a same control signal, where the first signal transmission and the second signal transmission may carry the same control signal information but experience different channels. In another example, the first signal transmission and the second signal transmission may be used to implement data channel spatial multiplexing of data signals, where the first signal transmission and the second signal transmission might carry different spatial layers and experience different channels. For such first signal transmission and second signal transmission, the TRP may also decide to perform the method 200.

### 2.1 Indicating different TCI states for a plurality of signal transmissions of different types

A plurality of signal transmissions of different types may have different purposes or functions. According to an embodiment of the present disclosure, different TCI states may be indicated for the first signal transmission and the second signal transmission that are of different types.

In some embodiments, the first signal transmission may be a downlink control signal transmission. The downlink control signal transmission may be used to transmit control information from the TRP to the UE. The control information carried by the downlink control signal transmission may include scheduling information for one or more other types of signal transmissions. As an example rather than limitation, the downlink control signal transmission may be a PDCCH transmission. The scheduling information carried by the PDCCH may include downlink control information (DCI), etc.

In the above embodiment, the second signal transmission may be another type of transmission that is different from the downlink control signal transmission.

In some embodiments, the second signal transmission may be a data signal transmission. In some examples, the data signal transmission may be a downlink data signal transmission for transmitting data packet(s) from the TRP to the UE. By way of example rather than limitation, an example of the downlink data signal transmission is a physical downlink shared channel (PDSCH) transmission. The PDSCH transmission may be associated with the first signal transmission. For example, the PDSCH transmission may be scheduled by the first signal transmission that is a PDCCH transmission. In other examples, the data signal transmission may be an uplink data signal transmission for transmitting data from the UE to the TRP. By way of example rather than limitation, an example of the uplink data signal transmission is a physical uplink shared channel (PUSCH) transmission.

In some embodiments, the second signal transmission may be a pilot signal transmission. In some examples, the second signal transmission may be a downlink pilot signal transmission for transmitting a downlink pilot signal from the TRP to the UE. By way of example rather than limitation, the downlink pilot signal may be an aperiodic channel state information reference signal (Ap-CSI-RS). In other examples, the second signal transmission may be an uplink pilot signal transmission for transmitting an uplink pilot signal from the UE to the TRP. By way of example rather than limitation, the uplink pilot signal may be an aperiodic sounding reference signal (Ap-SRS). The second signal transmission, as a pilot signal transmission, may be associated with the first signal transmission as a control signal transmission. For example, the second signal transmission, as an Ap-CSI-RS transmission or an Ap-SRS transmission, may be scheduled by the first signal transmission as a PDCCH transmission (e.g., a DCI in the PDCCH).

In a further embodiment, the TRP may also perform a third signal transmission associated with the TRP. For the third signal transmission, the TRP may indicate a third TCI state. The third signal transmission may be of a different type than the first signal transmission and the second signal transmission. Accordingly, the third TCI state indicated for the third signal transmission may be different from the first TCI state indicated for the first signal transmission and the second TCI state indicated for the second signal transmission.

In some embodiments, the first signal transmission may be a downlink control signal transmission (e.g., a PDCCH transmission), the second signal transmission may be a downlink data signal transmission (e.g., a PDSCH transmission scheduled by the PDCCH transmission) associated with the downlink control signal transmission, while the third signal transmission may be an uplink control signal transmission associated with the downlink data signal transmission. The uplink control signal transmission may include feedback information associated with the downlink data signal transmission. By way of example rather than limitation, the third signal transmission may be a physical uplink control channel (PUCCH) transmission associated with the PDSCH transmission. The PUCCH transmission may include information such as a hybrid automatic repeat request (HARQ). The HARQ information may be used to provide feedback to the TRP about reception of the PDSCH transmission. For example, the HARQ information may include a HARQ-ACK or a HARQ-NACK.

In some embodiments, the first signal transmission may be a downlink control signal transmission (e.g., a PDCCH transmission), the second signal transmission may be a downlink pilot signal transmission (e.g., an Ap-CSI-RS transmission scheduled by the PDCCH transmission) associated with the downlink control signal transmission, while the third signal transmission may be an uplink pilot signal transmission (e.g., an Ap-SRS transmission scheduled by the PDCCH transmission) associated with the downlink control signal transmission. Different TCI states may be indicated for the downlink control signal transmission, the downlink pilot signal transmission, and the downlink control signal transmission.

Table 1 and Table 2 show examples where both of the first signal transmission and the second signal transmission are downlink transmissions, in which a total number of configured downlink TCI states is M (M>1).

**Table 1**

| Transmission | Transmission type | TCI state indicated |
|---|---|---|
| First signal transmission | PDCCH | TCI state A |
| Second signal transmission | PDSCH | TCI state B |

**Table 2**

| Transmission | Transmission type | TCI state indicated |
|---|---|---|
| First signal transmission | PDCCH | TCI state A |
| Second signal transmission | Ap-CSI-RS | TCI state C |

Table 3 and Table 4 show examples where the first signal transmission is a downlink transmission while the second signal transmission is an uplink transmission, in which a total number of configured uplink TCI states is N (N>1).

**Table 3**

| Transmission | Transmission type | TCI state indicated |
|---|---|---|
| First signal transmission | PDCCH | TCI state 1 |
| Second signal transmission | PUSCH | TCI state 2 |

**Table 4**

| Transmission | Transmission type | TCI state indicated |
|---|---|---|
| First signal transmission | PDCCH | TCI state 1 |
| Second signal transmission | Ap-SRS | TCI state 3 |

Table 5 and Table 6 show examples of the first signal transmission, the second signal transmission, and the third signal transmission.

**Table 5**

| Transmission | Transmission type | TCI state indicated |
|---|---|---|
| First signal transmission | PDCCH | TCI state a |
| Second signal transmission | PDSCH | TCI state b |
| Third signal transmission | PUCCH | TCI state c |

**Table 6**

| Transmission | Transmission type | TCI state indicated |
|---|---|---|
| First signal transmission | PDCCH | TCI state d |
| Second signal transmission | Ap-CSI-RS | TCI state e |
| Third signal transmission | Ap-SRS | TCI state f |

It should be noted that different representations are used for each of Tables 1 to 6 to distinguish different TCI states within a same table. Different tables may have a same TCI state. For example, "TCI state d" in Table 6 is different from "TCI state e" and "TCI state f" in the same Table 6, but this "TCI state d" may be the same as "TCI state a" in another table (e.g., Table 5). The same is true for following Tables 7 to 14.

According to an embodiment of the present disclosure, the different TCI states indicated for the first signal transmission, the second signal transmission (and optionally the third signal transmission) may be associated with different beams. Based on the indicated different TCI states, the TRP and the UE may use corresponding different transmit/receive beams to perform the first signal transmission, the second signal transmission (and optionally the third signal transmission).

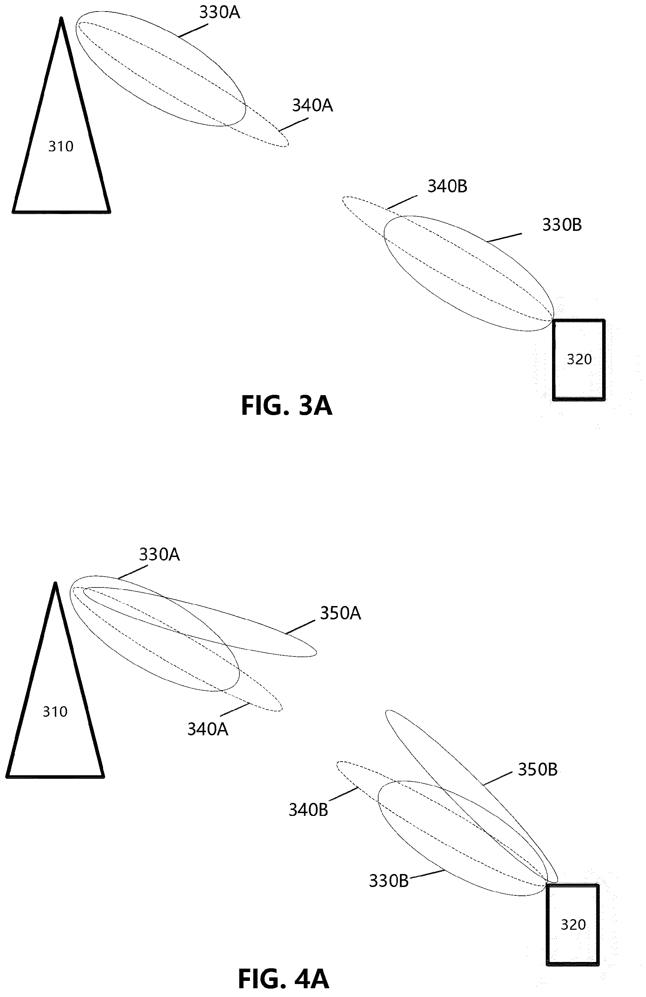

FIG. 3A illustrates a beam scheme for a first signal transmission and a second signal transmission according to an embodiment of the present disclosure. For a TRP 310 and a UE 320, a first TCI state indicated for the first signal transmission may result in using a first pair of beams (330A, 330B) to perform transmission and reception of the first signal transmission. A second TCI state indicated for the second signal transmission may result in using a second pair of beams (340A, 340B) to perform transmission and reception of the second signal transmission. The second pair of beams may be different from the first pair of beams, depending on the types of the first signal transmission and the second signal transmission and their implemented functions. For example, a width of each beam in the second pair of beams may be narrower than that of each beam in the first pair of beams. In this case, the first pair of beams, which are relatively wider, is suitable for a control signaling transmission (e.g., a PDCCH transmission) to improve coverage of the control signaling, while the second pair of beams, which are relatively narrower, is suitable for a data transmission (e.g., a PDSCH transmission) to improve efficiency of the data transmission. In other embodiments, the second pair of beams may also differ from the first pair of beams in other aspects (e.g., a direction, a modulation and coding scheme, and/or power control, etc.).

FIG. 3B illustrates a beam scheme for a first signal transmission, a second signal transmission, and a third signal transmission according to an embodiment of the present disclosure. For the TRP 310 and the UE 320, a first TCI state indicated for the first signal transmission may result in using a first pair of beams (330A, 330B) to perform transmission and reception of the first signal transmission. A second TCI state indicated for the second signal transmission may result in using a second pair of beams (340A, 340B) to perform transmission and reception of the second signal transmission. A third TCI state indicated for the third signal transmission may result in using a third beam pair (350A, 350B) to perform transmission and reception of the third signal transmission. Once again, the first pair of beams, the second pair of beams, and the third beam pair may be different from each other, depending on the types of the first signal transmission, the second signal transmission, and the third signal transmission and their implemented functions.

According to an embodiment of the present disclosure, if the first signal transmission and the second signal transmission are both downlink transmissions sent from the TRP to the UE, it may be determined that a scheduling gap between the first signal transmission and the second signal transmission is greater than a predetermined time threshold, such that different beams may be used for the first signal transmission and the second signal transmission.

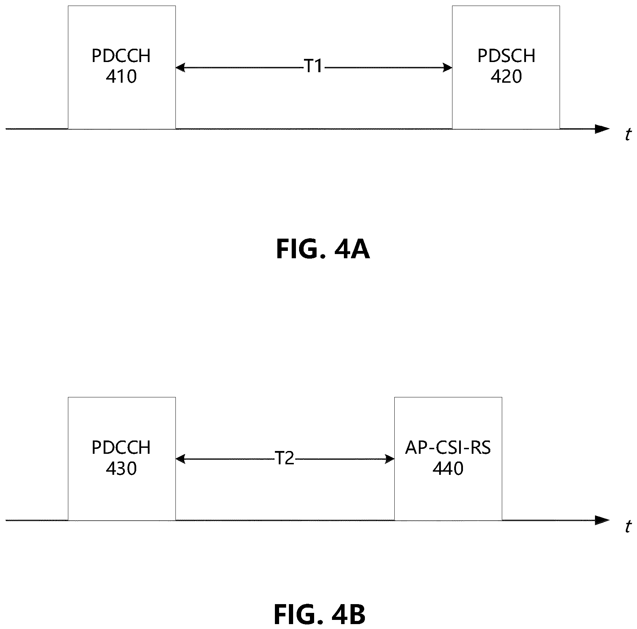

FIG. 4A illustrates a schematic sequence diagram for a PDCCH transmission and a PDSCH transmission according to an embodiment of the present disclosure.

Conventionally, if there is no TCI field in the DCI of the first signal transmission (PDCCH transmission) 410, and if a scheduling gap (T1) between the first signal transmission 410 and a second signal transmission (PDSCH transmission) 420 that is scheduled by the first signal transmission 410 is greater than an associated first time threshold set by the TRP, the TCI state and the QCL assumption associated with the second signal transmission 420 will typically follow those of the first signal transmission 410 (i.e., the second signal transmission 420 has a consistent TCI state with the first signal transmission 410).

However, according to an embodiment of the present disclosure, the TRP may indicate a different TCI state for such second signal transmission 420 than that for the first signal transmission 410, so that the two transmissions may be transmitted with different beams. In a preferred embodiment, although the two TCI states are different, the second TCI state indicated for the second signal transmission 420 may be relevant to the first TCI state indicated for the first signal transmission 410. For example, a beam corresponding to the second TCI state may have a same direction as a beam corresponding to the first TCI state, but with a narrower width.

FIG. 4B illustrates a schematic sequence diagram for a PDCCH transmission and an Ap-CSI-RS transmission according to an embodiment of the present disclosure.

Conventionally, if there is no TCI field in the DCI of a first signal transmission (PDCCH transmission) 430, and a scheduling gap (T2) between the first signal transmission 430 and a second signal transmission (Ap-CSI-RS transmission) 440 that is scheduled by the first signal transmission 430 is greater than an associated second time threshold set by the TRP, the TCI state and the QCL assumption associated with the second signal transmission 440 will typically follow those of the first signal transmission 430 (i.e., the second signal transmission 440 has a consistent TCI state with the first signal transmission 430).

However, according to an embodiment of the present disclosure, the TRP may indicate a different TCI state for such a second signal transmission 440 than that for the first signal transmission 430, so that the two transmissions may be transmitted with different beams. In a preferred embodiment, although the two TCI states are different, the second TCI state indicated for the second signal transmission 440 may be relevant to the first TCI state indicated for the first signal transmission 430. For example, a beam corresponding to the second TCI state may have a same direction as a beam corresponding to the first TCI state, but with a narrower width.

### 2.2 Indicating different TCI states for signal transmissions of a same type that experience different channels

According to an embodiment of the present disclosure, when the first signal transmission and the second signal transmission are associated with a plurality of signals of the same type that experience different channels, different TCI states may be indicated for the first signal transmission and the second signal transmission.

In some embodiments of the present disclosure, the first signal transmission and the second signal transmission may be used to perform spatial diversity transmission of a downlink control signal. The spatial diversity transmission may include a plurality of downlink control signal transmissions associated with a same downlink control signal. The plurality of downlink control signal transmissions may include at least the first signal transmission and the second signal transmission, and may additionally include one or more additional transmissions of the same type. The plurality of downlink control signal transmissions may be performed simultaneously. The plurality of downlink control signal transmissions may correspond to a plurality of different beams, each beam experiencing a respective channel. Channel conditions (e.g., channel quality) for these channels may be different. With the spatial diversity transmission of the downlink control signal, coverage of the downlink control signal may be expanded and reliability of the downlink control signal transmission may be improved. Since the plurality of downlink control signal transmissions are associated with the same downlink control signal, each of the plurality of downlink control signal transmissions may carry same CORESET information. Since channel conditions experienced by each of the downlink control signal transmissions are different, a separate TCI state may be indicated for each of the downlink control signal transmissions.

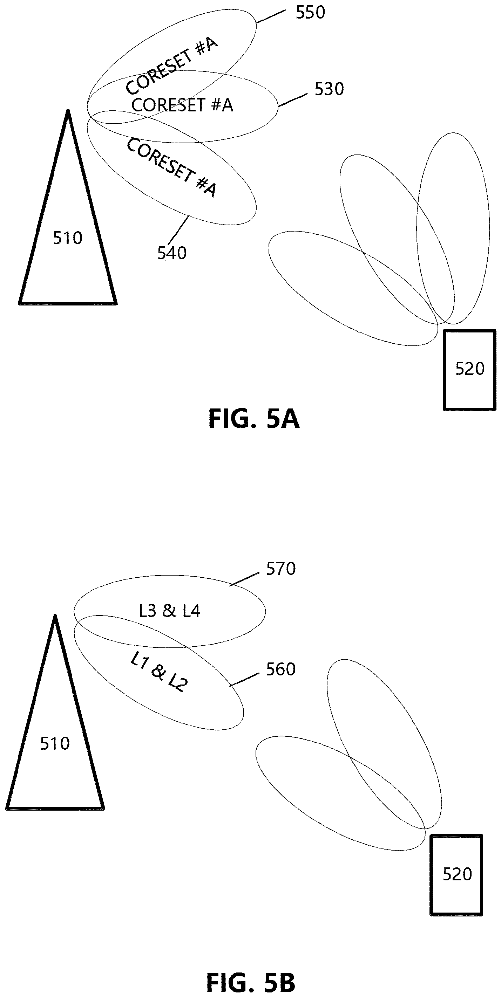

FIG. 5A illustrates a schematic diagram of spatial diversity transmission according to an embodiment of the present disclosure. As shown in FIG. 5A, a TRP 510 may simultaneously transmit a plurality of downlink control signal transmissions 530, 540, 550 that are associated with a same downlink control signal, for reception by a UE 520. Each of the downlink control signal transmissions 530, 540, 550 carries CORESET information (e.g., CORESET#A). The downlink control signal transmissions 530, 540, 550 may each have an associated beam, which may have a respective direction. The UE 520 may receive with corresponding beams. Compared with use of a single beam associated with a single downlink control signal transmission, the spatial diversity transmission with the plurality of downlink control signal transmissions 530, 540, 550 expands coverage of the downlink control signal. For the plurality of downlink control signal transmissions 530, 540, 550 transmitted simultaneously, the TRP may indicate a different TCI state for each of the downlink control signal transmissions. For example, the TRP may indicate TCI states A, B, and C for each of the downlink control signal transmissions 530, 540, and 550, respectively.

According to an optional embodiment of the present disclosure, the TRP 510 may be configured to determine, based on capabilities of the UE, a group of TCI states that the UE is able to process simultaneously. The TRP 510 may then apply at least a subset of the group of TCI states to the spatial diversity transmission of the downlink control signal. For example, the TRP 510 may indicate, for the plurality of downlink control signal transmissions for the spatial diversity transmission, different TCI states from the group of TCI states.

Specifically, the TRP 510 may receive an indication of UE capabilities from the UE 520, which may indicate whether the UE 520 supports reception of a PDCCH spatial diversity transmission.

Additionally, if the UE 520 has the capabilities to support reception of the PDCCH spatial diversity transmission, the TRP 510 may further receive a parameter ***M_max*** from the UE 520, the value of which may indicate a maximum number of simultaneously activated downlink TCI states that are supported by the UE 520. For example, the UE 520 may report to the TRP 510 that the maximum number of simultaneously activated downlink TCI states is three (3). This means that the plurality of downlink control signal transmissions for the spatial diversity transmission may be indicated with a maximum of three different TCI states. The number parameter ***M_max*** may be reported to the TRP 510 together with or separately from the above indication of UE capabilities.

Additionally, the TRP 510 may further receive, from the UE 520, groups of TCI states that can be simultaneously received by the UE 520. Each group of TCI states may describe a plurality of TCI states that can be simultaneously received by the UE 520 (i.e., a plurality of beams associated with the plurality of TCI states that can be received simultaneously). By way of example rather than limitation, for an exemplary full set of TCI states {A, B, C, D, E, F}, the UE may indicate that TCI states {A, B, C} can be received simultaneously, TCI states {A, D, E} can be received simultaneously, and TCI states {B, D, F} cannot be received simultaneously. Accordingly, when spatial diversity transmission is performed, the TRP may indicate TCI states A, B, C (alternatively, A, D, E) for the plurality of downlink control signal transmissions, but may not indicate TCI states B, D, F. In one example, the UE 520 may report, through a group-based beam report within a single TRP, group(s) of TCI states that can be simultaneously received by the UE 520.

According to an embodiment of the present disclosure, when spatial diversity transmission is used to send the downlink control signal, for a downlink data signal transmission (e.g., PDSCH) or a downlink pilot signal transmission (Ap-CSI-RS) associated with the downlink control signal (e.g., PDCCH), a default beam associated with the downlink data signal transmission or the downlink pilot signal transmission may be determined through various configuration approaches.

In one example, the default beam may be determined based on a predefined rule. Specifically, a specific beam may be selected from a plurality of beams that are being used for the spatial diversity transmission, with the specific beam having an activated TCI state that has a minimum ID. That specific beam may therefore be determined as the default beam.

In another example, the default beam may be determined based on signaling. For example, a signaling for scheduling the spatial diversity transmission may additionally indicate a default beam that is associated with the downlink data signal transmission or associated with the downlink pilot signal transmission. Specifically, the signaling (e.g., MAC CE and/or DCI) for scheduling the plurality of beams for the spatial diversity transmission may include information for specifying the default beam.

According to an embodiment of the present disclosure, a downlink data signal transmission (e.g., PDSCH) or a downlink pilot signal transmission (Ap-CSI-RS) associated with the downlink control signal (e.g., PDCCH) may use the determined default beam, unless otherwise indicated.

In some other embodiments of the present disclosure, the first signal transmission and the second signal transmission may be used to perform data channel spatial multiplexing of a downlink data signal. The data signal may be divided into a plurality of different spatial layers. The spatial multiplexing of data channel may include transmit a plurality of spatial layers with a plurality of downlink data signal transmissions to support a high data rate. The plurality of downlink data signal transmissions may include at least the first signal transmission and the second signal transmission. It is understood that the plurality of downlink data signal transmissions are not limited to those two signal transmissions, but may alternatively include more than two signal transmissions of the same type. In some embodiments, each signal transmission of the plurality of downlink data signal transmissions may include one spatial layer of the same type or a combination of multiple spatial layers. In some embodiments, data streams between layers among the multiple spatial layers within one downlink data signal transmission may be transmitted in parallel. In the above embodiments, the plurality of downlink data signal transmissions may correspond to a plurality of different beams. Each of the beams may carry a different spatial layer (or a separate combination of layers). Since channel conditions (e.g., channel quality) experienced by each of the downlink data signal transmissions may be different, a different TCI state may be indicated for each of the downlink data signal transmissions.

FIG. 5B illustrates a schematic diagram of data channel spatial multiplexing according to an embodiment of the present disclosure. As shown in FIG. 5B, the TRP 510 may transmit a plurality of downlink data signal transmissions 560, 570, for reception by the UE 520. Each of the downlink data signal transmissions 560, 570 may carry a separate spatial layer (or a separate combination of layers). Downlink data signal transmissions 560, 570 may each have associated beam(s). These beams may have different modulation and coding schemes (MCS), including different modulations, channel coding rates, power control, and the like. In the example shown in FIG. 5B, layer 1 and layer 2 of PDSCH may share a same first MCS and be carried by the first downlink data channel transmission 560, while layer 3 and layer 4 of PDSCH may share a same second MCS and be carried by the second downlink data channel transmission 570. This data channel spatial multiplexing may provide data transmission efficiency. Different TCI states may be indicated for the transmitted plurality of downlink data signal transmissions 560, 570. For example, TCI state D and TCI state E may be indicated for downlink data signal transmissions 560, 570, respectively.

### 2.3 Multi-TRP scenario

The solutions described above may be extended to a multi-TRP scenario. In a multi-TRP scenario, there may be a plurality of TRPs at network side, and the plurality of TRPs may serve a same UE collaboratively. For example, the first signal transmission and/or the second signal transmission, which is performed by a single TRP, may be performed jointly by the plurality of TRPs. Therefore, it is also desired to design a specific TCI state indication scheme for the multi-TRP scenario.

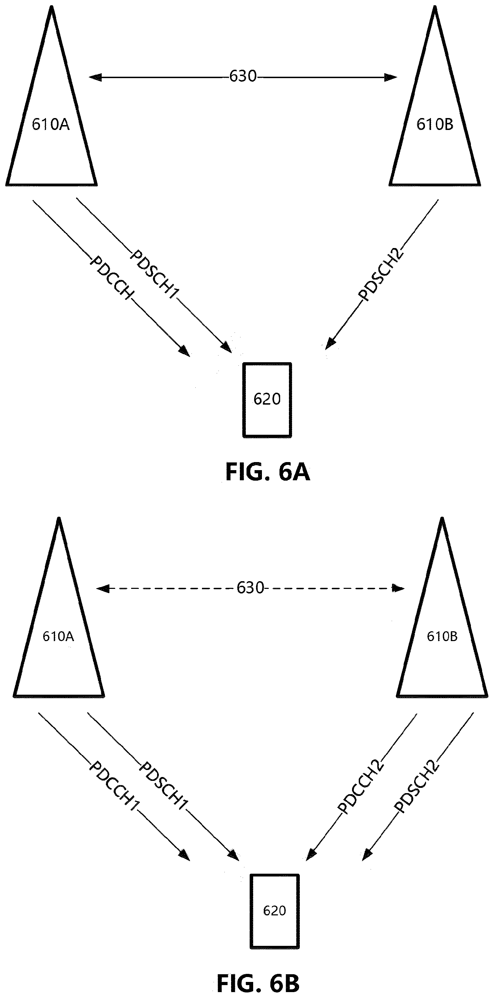

FIGS. 6A-6D illustrate embodiments of multi-TRP scenarios according to embodiments of the present disclosure. In these embodiments, there are two TRPs at network side, namely, TRP 610A and TRP 610B. Both of the TRP 610A and the TRP 610B may communicate with a UE 620. It should be understood that, although two TRPs are shown, there may be more TRPs in other embodiments,without limitation.

According to an embodiment of the present disclosure, the second signal transmission may include a first transmission associated with the TRP 610A and a second transmission associated with the TRP 610B. According to an embodiment of the present disclosure, the first transmission and the second transmission within the second signal transmission may have a same specific type. As discussed above, the specific type may be any of: a downlink data signal transmission, a downlink aperiodic pilot signal transmission, an uplink control signal transmission, or an uplink aperiodic pilot signal transmission.

According to an embodiment of the present disclosure, a backhaul link 630 may exist between the TRP 610A and the TRP 610B. The backhaul link 630 allows the TRP 610A and the TRP 610B to operate cooperatively. In a case where the first signal transmission is a downlink control signal transmission (e.g., PDCCH transmission), it may be determined, at least based in part on quality of the backhaul link 630 between the TRP 610A and the TRP 610B, whether the downlink control signal transmission can be transmitted solely by one of the TRP 610A or the TRP 610B.

If the backhaul link 630 has good quality (e.g., high reliability, a high rate, and/or a low latency), the first signal transmission may be transmitted alone by a single one of the TRP 610A or the TRP 610B. In this case, the first signal transmission may be a single downlink control signal transmission. The single downlink control signal transmission may schedule simultaneously one or more transmissions (e.g., the first transmission and the second transmission within the second signal transmission) between the UE 620 and both of the TRP 610A and the TRP 610B. The other TRP does not have to perform an additional downlink control signal transmission.

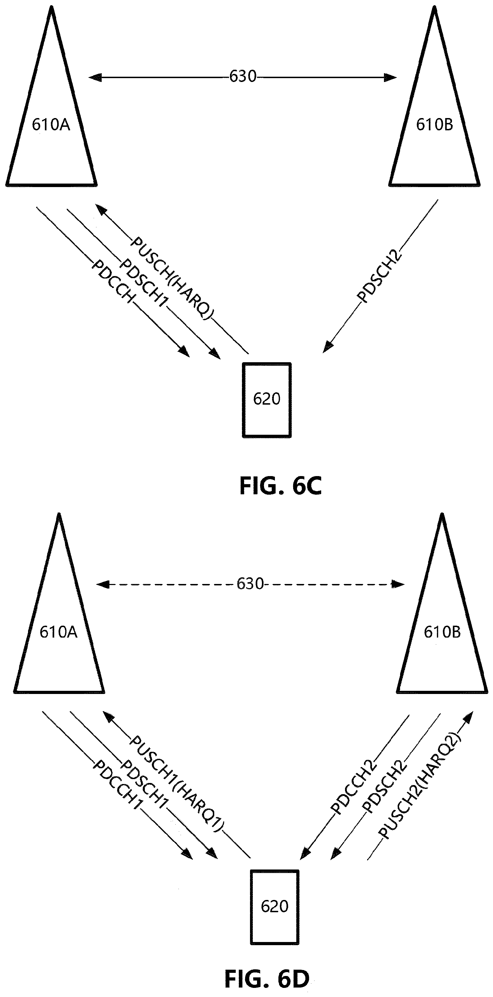

In the embodiments of FIGS. 6A and 6C, a backhaul link 630 having good quality is shown by a solid line. By way of example rather than limitation, the first signal transmission is shown as being performed by the TRP 610A. It is understood that the first signal transmission may alternatively be performed by the TRP 610B in other embodiments.

If the backhaul link 630 does not have good quality, each of the TRPs 610A and 610B may perform its own respective downlink control signal transmission. As such, the first signal transmission may include a first downlink control signal transmission that is performed by the TRP 610A and a second downlink control signal transmission that is performed by the TRP 610B. The first downlink control signal transmission may schedule one or more transmissions between the TRP 610A and the UE 620 (e.g., the first transmission within the second signal transmission), while the second downlink control signal transmission may schedule one or more transmissions between the TRP 610B and the UE 620 (e.g., the second transmission within the second signal transmission).

In the embodiments of FIGS. 6B and 6D, the backhaul link 630 that does not have good quality is shown by dashed lines. In this case, each of the TRPs may perform its own corresponding downlink control signal transmission.

In the embodiment of FIG. 6A, the first signal transmission is a single downlink control signal transmission (e.g., PDCCH) that is transmitted solely by the TRP 610A from the TRP 610A and the TRP 610B, and the second signal transmission includes a first downlink data signal transmission (e.g., PDSCH1) associated with the TRP 610A and a second downlink data signal transmission (e.g., PDSCH2) associated with the TRP 610B. According to an embodiment of the present disclosure, different TCI states may be indicated for the first signal transmission, the first downlink data signal transmission, and the second downlink data signal transmission, respectively, as shown in Table 7.

**Table 7**

| Transmission | Transmission type | TCI state indicated |
|---|---|---|
| First signal transmission | PDCCH | TCI state A |
| Second signal transmission | PDSCH1 | TCI state B |
| | PDSCH2 | TCI state C |

In one alternative embodiment (not shown), the first signal transmission is a single downlink control signal transmission (e.g., PDCCH) that is transmitted solely by TRP 610A, and the second signal transmission may include a first downlink pilot signal transmission (e.g., Ap-CSI-RS1) associated with the TRP 610A and a second downlink pilot signal transmission (e.g., Ap-CSI-RS2) associated with the TRP 610B. According to an embodiment of the present disclosure, different TCI states may be indicated for the first signal transmission, the first downlink pilot signal transmission, and the second downlink pilot signal transmission, respectively, as shown in Table 8.

**Table 8**

| Transmission | Transmission type | TCI state indicated |
|---|---|---|
| First signal transmission | PDCCH | TCI state A |
| Second signal transmission | Ap-CSI-RS1 | TCI state D |
| | Ap-CSI-RS2 | TCI state E |

In another alternative embodiment (not shown), the first signal transmission is a single downlink control signal transmission (e.g., PDCCH) that is transmitted solely by TRP 610A, and the second signal transmission may include a first uplink data signal transmission (e.g., PUSCH1) associated with the TRP 610A and a second uplink data signal transmission (e.g., PUSCH2) associated with the TRP 610B. According to an embodiment of the present disclosure, different TCI states may be indicated for the first signal transmission, the first uplink data signal transmission, and the second uplink data signal transmission, respectively, as shown in Table 9.

**Table 9**

| Transmission | Transmission type | TCI state indicated |
|---|---|---|
| First signal transmission | PDCCH | TCI state A |
| Second signal transmission | PUSCH1 | TCI state B |
| | PUSCH2 | TCI state C |

In another alternative embodiment (not shown), the first signal transmission is a single downlink control signal transmission (e.g., PDCCH) that is transmitted solely by TRP 610A, and the second signal transmission may include a first uplink pilot signal transmission (e.g., Ap-SRS 1) associated with the TRP 610A and a second uplink pilot signal transmission (e.g., Ap-SRS2) associated with the TRP 610B. According to an embodiment of the present disclosure, different TCI states may be indicated for the first signal transmission, the first uplink pilot signal transmission, and the second uplink pilot signal transmission, respectively, as shown in Table 10.

**Table 10**

| Transmission | Transmission type | TCI state indicated |
|---|---|---|
| First signal transmission | PDCCH | TCI state A |
| Second signal transmission | Ap-SRS 1 | TCI state D |
| | Ap-SRS2 | TCI state E |

In the TCI state indication schemes described in Tables 7-10, the indication of TCI states may be performed by the TRP 610A, or by another electronic device that controls the TRP 610A.

In the embodiment of FIG. 6B, due to the poor quality of the backhaul link 630, the first signal transmission includes a plurality of downlink control signal transmissions associated with the plurality of TRPs. Specifically, the plurality of downlink control signal transmissions includes a first downlink control signal transmission (e.g., PDCCH1) associated with the TRP 610A and a second downlink control signal transmission (e.g., PDCCH2) associated with the TRP 610B. The second signal transmission includes a first downlink data signal transmission (e.g., PDSCH1) associated with the TRP 610A and a second downlink data signal transmission (e.g., PDSCH2) associated with the TRP 610B. The first downlink control signal transmission may schedule the first downlink data signal transmission, and the second downlink control signal transmission may schedule the second downlink data signal transmission. According to an embodiment of the present disclosure, different TCI states may be indicated for the first downlink control signal transmission, the second downlink control signal transmission, the first downlink data signal transmission, and the second downlink data signal transmission, respectively, as shown in Table 11.

**Table 11**

| Transmission | Transmission type | TCI state indicated |
|---|---|---|
| First signal transmission | PDCCH1 | TCI state A |
| | PDCCH2 | TCI state B |
| Second signal transmission | PDSCH1 | TCI state C |
| | PDSCH2 | TCI state D |

Compared to the embodiment shown in FIG. 6B, one alternative embodiment (not shown) may include that the second signal transmission may alternatively include a first downlink pilot signal transmission (e.g., Ap-CSI-RS1) associated with the TRP 610A and a second downlink pilot signal transmission (e.g., Ap-CSI-RS2) associated with the TRP 610B. Different TCI states indicated according to the embodiment of the present disclosure are shown in Table 12.

**Table 12**

| Transmission | Transmission type | TCI state indicated |
|---|---|---|
| First signal transmission | PDCCH1 | TCI state E |
| | PDCCH2 | TCI state F |
| Second signal transmission | Ap-CSI-RS1 | TCI state G |
| | Ap-CSI-RS2 | TCI state H |

Compared to the embodiment shown in FIG. 6B, another alternative embodiment (not shown) may include that the second signal transmission may alternatively include a first uplink data signal transmission (e.g., PUSCH1) associated with the TRP 610A and a second uplink data signal transmission (e.g., PUSCH2) associated with the TRP 610B. Different TCI states indicated according to the embodiment of the present disclosure are shown in Table 13.

**Table 13**

| Transmission | Transmission type | TCI state indicated |
|---|---|---|
| First signal transmission | PDCCH1 | TCI state 1 |
| | PDCCH2 | TCI state 2 |
| Second signal transmission | PUSCH1 | TCI state 3 |
| | PUSCH2 | TCI state 4 |

Compared to the embodiment shown in FIG. 6B, yet another alternative embodiment (not shown) may include that the second signal transmission may include a first uplink pilot signal transmission (e.g., Ap-SRS1) associated with the TRP 610A and a second uplink pilot signal transmission (e.g., Ap-SRS2) associated with the TRP 610B. Different TCI states indicated according to the embodiment of the present disclosure are shown in Table 13.

**Table 14**

| Transmission | Transmission type | TCI state indicated |
|---|---|---|
| First signal transmission | PDCCH1 | TCI state 5 |
| | PDCCH2 | TCI state 6 |
| Second signal transmission | Ap-SRS 1 | TCI state 7 |
| | Ap-SRS2 | TCI state 8 |

According to a further embodiment of the present disclosure, a third signal transmission associated with the TRP(s) may further be performed in a multi-TRP scenario. For the third signal transmission, a third TCI state may be indicated. The third signal transmission may be of a different type from the first signal transmission and the second signal transmission. Accordingly, the third TCI state indicated for the third signal transmission may be different from the first TCI state indicated for the first signal transmission and the second TCI state indicated for the second signal transmission.

According to some embodiments of the present disclosure, the third signal transmission may be an uplink control signal transmission that is associated with the downlink data signal transmission. The uplink control signal transmission may include feedback information associated with the downlink data signal transmission. For example, the third signal transmission may be a PUCCH transmission that is associated with the PDSCH transmission. The PUCCH transmission may include information such as a hybrid automatic repeat request (HARQ). The HARQ information may be used to provide feedback (for example, a HARQ-ACK or a HARQ-NACK) to the TRP about reception of the PDSCH transmission.

FIGS. 6C-6D illustrate embodiments of multi-TRP scenarios according to embodiments of the present disclosure, wherein the third signal transmission includes a PUSCH transmission.

In the embodiment of FIG. 6C, similar to the embodiment of FIG. 6A, the first signal transmission is a single downlink control signal transmission (e.g., PDCCH) that is transmitted solely by the TRP 610A from the TRP 610A and the TRP 610B, and the second signal transmission includes a first downlink data signal transmission (e.g., PDSCH1) associated with the TRP 610A and a second downlink data signal transmission (e.g., PDSCH2) associated with the TRP 610B. Since the backhaul link 630 between the two TRPs 610A and 610B has good quality, the third signal transmission may likewise include a single uplink control signal transmission (e.g., a single PUCCH) that is associated with only the TRP 610A. The single uplink control signal transmission may include feedback information (e.g., HARQ information) associated with both of the first downlink data signal transmission and the second downlink data signal transmission. The single uplink control signal transmission may be transmitted to only the TRP 610A and not to the TRP 610B. After receiving the single uplink control signal transmission, the TRP 610A may notify, via the backhaul link 630, the TRP 610B of the feedback information associated with the second downlink data signal transmission. According to an embodiment of the present disclosure, different TCI states may be indicated for the first signal transmission, the first downlink data signal transmission, the second downlink data signal transmission, and the third signal transmission, as shown in Table 15.

**Table 15**

| Transmission | Transmission type | TCI state indicated |
|---|---|---|
| First signal transmission | PDCCH | TCI state a |
| Second signal transmission | PDSCH1 | TCI state b |
| | PDSCH2 | TCI state c |
| Third signal transmission | PUCCH | TCI state d |

In the embodiment of FIG. 6D, similar to the embodiment of FIG. 6B, the first signal transmission includes a plurality of downlink control signal transmissions, the plurality of downlink control signal transmissions including a first downlink control signal transmission (e.g., PDCCH1) associated with the TRP 610A and a second downlink control signal transmission (e.g., PDCCH2) associated with the TRP 610B. The second signal transmission includes a first downlink data signal transmission (e.g., PDSCH1) associated with the TRP 610A and a second downlink data signal transmission (e.g., PDSCH2) associated with the TRP 610B. The first downlink control signal transmission schedules the first downlink data signal transmission, and the second downlink control signal transmission schedules the second downlink data signal transmission. Since the backhaul link 630 between the two TRPs 610A and 610B does not have good quality, the third signal transmission may include a first uplink control signal transmission (e.g., PUCCH1) associated with the TRP 610A and a second uplink control signal transmission (e.g., PUCCH2) associated with the TRP 610. The first uplink control signal transmission may include first feedback information (HARQ1) associated with the first downlink data signal transmission. The second uplink control signal transmission may include second feedback information (HARQ2) associated with the second downlink data signal transmission. The first uplink control signal transmission may be transmitted to the TRP 610A, and the second uplink control signal transmission may be transmitted to the TRP 610B. According to an embodiment of the present disclosure, different TCI states may be indicated for the first downlink control signal transmission, the second downlink control signal transmission, the first downlink data signal transmission, the second downlink data signal transmission, the first uplink control signal transmission, and the second uplink control signal transmission, as shown in Table 16.

**Table 16**

| Transmission | Transmission type | TCI state indicated |
|---|---|---|
| First signal transmission | PDCCH1 | TCI state a |
| | PDCCH2 | TCI state b |
| Second signal transmission | PDSCH1 | TCI state c |
| | PDSCH2 | TCI state d |
| Third signal transmission | PUCCH1 | TCI state e |
| | PUCCH2 | TCI state f |

According to an embodiment of the present disclosure, the downlink data signal transmission transmitted by each of the TRPs may also carry a separate spatial layer (or a separate combination of layers) in the multi-TRP scenario. For example, in the embodiments shown in FIGS. 6A and 6C, the first downlink data signal transmission transmitted by the TRP 610A may carry layer 1 of the PDSCH, while the second downlink data signal transmission transmitted by the TRP 610B may carry layer 2 of the PDSCH. In other embodiments, the first downlink data signal transmission and the second downlink data signal transmission may carry different other spatial layers.

### 2.4 Indicating process(es) of a plurality of TCI states

According to an embodiment of the present disclosure, a plurality of TCI states may be indicated as a unified TCI state group.

In some embodiments, an approach to indicating the plurality of different TCI states may be determined based on capabilities of a UE. Specifically, the UE may report the capabilities of the UE to the TRP(s). In one embodiment, the UE may indicate to the TRP(s) whether the UE supports multi-beam operation(s). In an additional embodiment, the UE may also indicate signal groups or channel groups to the TRP, where each signal group may describe which signals may be grouped together, and each channel group may describe which channels may be grouped together. As an example, the UE may organize a downlink control signal (e.g., PDCCH) and a downlink data signal (e.g., PDSCH) into a same group, thereby indicating to the TRP(s) that the downlink control signal and the downlink data signal can be simultaneously indicated with different TCI states in a multi-beam operation. It should be understood that the UE may report one or more other signal groups or channel groups, and each signal group/channel group may contain other types of signal combinations or channel combinations.

According to an embodiment of the present disclosure, the TRP may use RRC parameters to enable a multi-beam operation for each signal group/channel group, based on capabilities reported by the UE. For this multi-beam operation, the UE may indicate different TCI states for different signal types/different channels.

According to an embodiment of the present disclosure, those different TCI states may be included in a unified TCI state group. The unified TCI state group may be indicated via various signaling approaches.

In one embodiment, the unified TCI state group may be activated, via MAC CE signaling, as a code point in DCI. The unified TCI state group may include multiple TCI states (e.g., {A, B, C}), so that the multiple TCI states may be activated at one time. In this case, the DCI may be a conventional DCI.

In another embodiment, the MAC CE may be a conventional MAC CE signaling (which may be used to activate up to eight TCI states), while the DCI may be modified to include a group of multiple TCI states so that the multiple TCI states included in a unified TCI state group may be activated at one time.

The present disclosure provides a unified TCI state design scheme for multi-beam operation(s). The scheme may indicate different TCI states for different signal beams according to the roles or purposes the signals achieve. Additionally, the scheme may indicate different TCI states for signals of a same type that experience different channels. The scheme is designed for two communication scenarios (a single TRP scenario and a multi-TRP scenario). More specifically, communication examples targeted by the scheme include but are not limited to: simultaneous transmissions of a control signal and a data signal; simultaneous transmissions of a control signal and a pilot signal; simultaneous transmissions of a control signal, a data signal and a feedback signal; diversity transmission of a control signal; spatial multiplexing of a data signal; coordinated transmission of control signals under multiple TRPs; separate transmissions of control signals under multiple TRPs, feedback signals under multiple TRPs, etc.

### 3. APPLICATION EXAMPLE(S)

The technology of the present disclosure can be applied to various products.

For example, a control-side electronic device according to an embodiment of the present disclosure may be implemented as or included in various control devices/base stations/TRP. For example, a transmitting device and a terminal device according to an embodiment of the present disclosure may be implemented as or included in various terminal devices.

For example, the control device/base station mentioned in the present disclosure may be implemented as any type of base station, for example eNB, such as macro eNB and small eNB. A small eNB may be an eNB that covers a cell smaller than a macro cell, such as a pico eNB, a micro eNB, and a home (femto) eNB. For another example, it may be implemented as a gNB, such as a macro gNB and a small gNB. A small gNB may be a gNB covering a cell smaller than a macro cell, such as a pico gNB, a micro gNB, and a home (femto) gNB. Alternatively, the base station may be implemented as any other type of base station, such as NodeB and Base Transceiver Station (BTS). The base station may include: a main body (also referred to as a base station device) configured to control radio communication; and one or more Remote Radio Heads (RRHs) disposed at a different location from the main body. In addition, various types of terminals to be described below may each operate as a base station by performing base station functions temporarily or semi-persistently.

For example, the terminal devices mentioned in the present disclosure may be implemented as mobile terminals (such as smart phones, tablet personal computers (PCs), notebook PCs, portable game terminals, portable/dongle-type mobile routers and digital cameras) or vehicle-mounted terminals (such as vehicle navigation devices) in some embodiments. The terminal device may also be implemented as a terminal performing machine-to-machine (M2M) communication (also referred to as a machine type communication (MTC) terminal). In addition, the terminal device may be a radio communication module (such as an integrated circuit module including a single wafer) mounted on each of the above terminals.

Application examples according to the present disclosure will be described below with reference to the drawings.

### Examples for base stations

It should be understood that the term base station in the present disclosure has the full breadth of its ordinary meaning, and includes at least a radio communication station used as portion of a wireless communication system or radio system to facilitate communication. Examples of the base station may be, for example but not limited to, the following: the base station may be either or both of a base transceiver station (BTS) and a base station controller (BSC) in the GSM system, and may be either or both of a radio network controller (RNC) or Node B in the WCDMA system, may be eNB in the LTE and LTE-Advanced system, or may be corresponding network nodes in future communication systems (e.g., the gNB that may appear in the 5G communication systems, eLTE eNB, etc.). Some of the functions in the base station of the present disclosure may also be implemented as an entity having a control function for communication in the scenario of a D2D, M2M, V2V and V2X communication, or as an entity that plays a spectrum coordination role in the scenario of a cognitive radio communication.

### First example

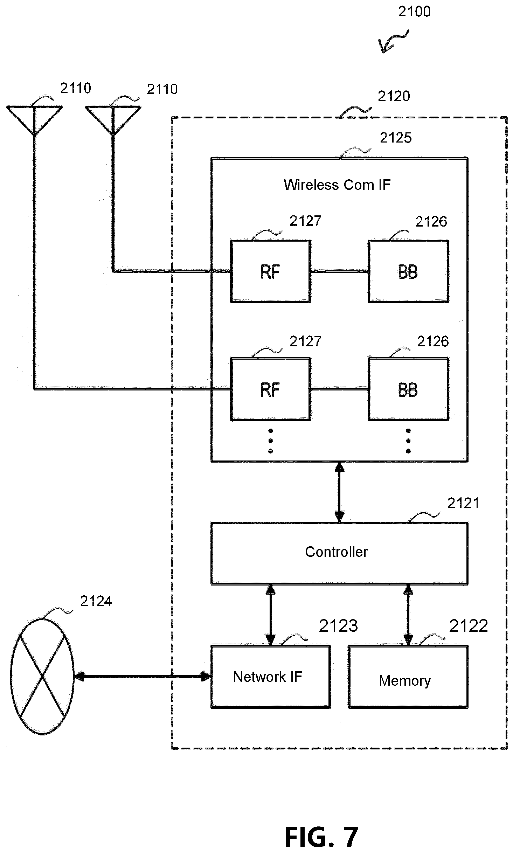

FIG. 7 is a block diagram illustrating a first example of a schematic configuration of a gNB to which the technology of the present disclosure may be applied. The gNB 2100 includes multiple antennas 2110 and a base station device 2120. The base station device 2120 and each antenna 2110 may be connected to each other via an RF cable. In one implementation, the gNB 2100 (or the base station device 2120) here may correspond to the above electronic device on the control side.

Each of the antennas 2110 includes a single or multiple antenna elements (such as multiple antenna elements included in a Multiple Input Multiple Output (MIMO) antenna), and is used for the base station device 2120 to send and receive wireless signals. As shown in FIG. 7, gNB 2100 may include multiple antennas 2110. For example, multiple antennas 2110 may be compatible with multiple frequency bands used by gNB 2100.

The base station device 2120 includes a controller 2121, a memory 2122, a network interface 2123 and a wireless communication interface 2125.

The controller 2121 may be, for example, a CPU or a DSP, and operates various functions of a higher layers of the base station device 2120. For example, the controller 2121 determines location information of a target terminal device in the at least one terminal devices according to the positioning information of at least one terminal device on the terminal side in the wireless communication system and a specific location configuration information of the at least one terminal device acquired by the wireless communication interface 2125. The controller 2121 may have a logical function to perform control such as radio resource control, radio bearer control, mobility management, access control and scheduling. This control may be performed in conjunction with nearby gNBs or core network nodes. The memory 2122 includes RAM and ROM, and stores programs executed by the controller 2121 and various types of control data (such as a terminal list, transmission power data, and scheduling data).

The network interface 2123 is a communication interface for connecting the base station device 2120 to the core network 2124. The controller 2121 may communicate with the core network node or another gNB via the network interface 2123. In this case, the gNB 2100 and the core network node or other gNB may be connected to each other through logical interfaces such as S1 interface and X2 interface. The network interface 2123 may also be a wired communication interface or a wireless communication interface for wireless backhaul. If the network interface 2123 is a wireless communication interface, the network interface 2123 may use a higher frequency band for wireless communication than the frequency band used by the wireless communication interface 2125.

The wireless communication interface 2125 supports any cellular communication scheme such as Long Term Evolution (LTE) and LTE-Advanced, and provides a wireless connection to terminals located in a cell of the gNB 2100 via the antenna 2110. The wireless communication interface 2125 may generally include, for example, a baseband (BB) processor 2126 and an RF circuit 2127. The BB processor 2126 may perform, for example, encoding/decoding, modulation/demodulation, and multiplexing/demultiplexing, and perform various types of signal processing for layers (such as L1, Medium Access Control (MAC), Radio Link Control (RLC), and Packet Data Convergence Protocol (PDCP)). Instead of the controller 2121, the BB processor 2126 may have a part or all of the logic functions described above. The BB processor 2126 may be a memory storing a communication control program, or a module including a processor configured to execute a program and related circuits. The update program may cause the function of the BB processor 2126 to change. The module may be a card or a blade inserted into a slot of the base station device 2120. Alternatively, the module may also be a chip mounted on a card or blade. Meanwhile, the RF circuit 2127 may include, for example, a mixer, a filter, and an amplifier, and transmit and receive wireless signals via the antenna 2110. Although FIG. 7 illustrates an example in which one RF circuit 2127 is connected to one antenna 2110, the present disclosure is not limited to this illustration, instead one RF circuit 2127 may be connected to multiple antennas 2110 at the same time.

As shown in FIG. 7, the wireless communication interface 2125 may include multiple BB processors 2126. For example, multiple BB processors 2126 may be compatible with multiple frequency bands used by gNB 2100. As shown in FIG. 7, the wireless communication interface 2125 may include multiple RF circuits 2127. For example, the multiple RF circuits 2127 may be compatible with multiple antenna elements. Although FIG. 7 illustrates an example in which the wireless communication interface 2125 includes multiple BB processors 2126 and multiple RF circuits 2127, the wireless communication interface 2125 may also include a single BB processor 2126 or a single RF circuit 2127.

### Second example

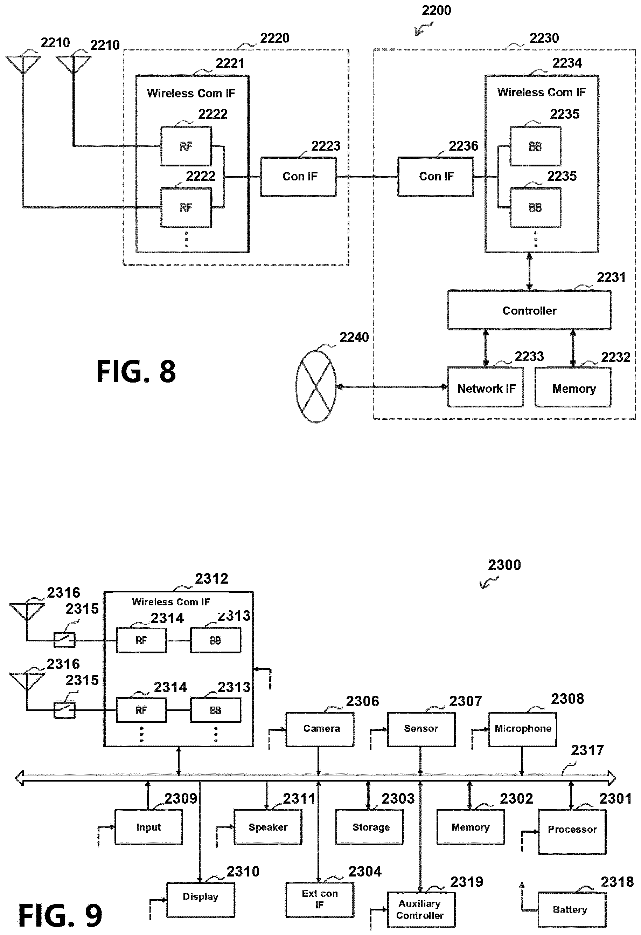

FIG. 8 is a block diagram illustrating a second example of a schematic configuration of a gNB to which the technology of the present disclosure may be applied. The gNB 2200 includes multiple antennas 2210, RRH 2220 and base station device 2230. The RRH 2220 and each antenna 2210 may be connected to each other via an RF cable. The base station device 2230 and the RRH 2220 may be connected to each other via a high-speed line such as an optical fiber cable. In one implementation, the gNB 2200 (or the base station device 2230) here may correspond to the above electronic device on the control side.

Each of the antennas 2210 includes a single or multiple antenna elements (such as multiple antenna elements included in a MIMO antenna), and is used for the RRH 2220 to send and receive wireless signals. As shown in FIG. 8, the gNB 2200 may include multiple antennas 2210. For example, the multiple antennas 2210 may be compatible with multiple frequency bands used by the gNB 2200.

The base station device 2230 includes a controller 2231, a memory 2232, a network interface 2233, a wireless communication interface 2234 and a connection interface 2236. The controller 2231, the memory 2232, and the network interface 2233 are the same as the controller 2121, the memory 2122, and the network interface 2123 described with reference to FIG. 7.

The wireless communication interface 2234 supports any cellular communication scheme (such as LTE and LTE-Advanced), and provides wireless communication to terminals located in a sector corresponding to the RRH 2220 via the RRH 2220 and the antenna 2210. The wireless communication interface 2234 may generally include, for example, a BB processor 2235. The BB processor 2235 is the same as the BB processor 2126 described with reference to FIG. 7 except that the BB processor 2235 is connected to the RF circuit 2222 of the RRH 2220 via the connection interface 2236. As shown in FIG. 8, the wireless communication interface 2234 may include multiple BB processors 2235. For example, the multiple BB processors 2235 may be compatible with multiple frequency bands used by the gNB 2200. Although FIG. 8 illustrates an example in which the wireless communication interface 2234 includes multiple BB processors 2235, the wireless communication interface 2234 may also include a single BB processor 2235.

The connection interface 2236 is an interface for connecting the base station device 2230 (wireless communication interface 2234) to the RRH 2220. The connection interface 2236 may also be a communication module for communication in the above high-speed line connecting the base station device 2230 (wireless communication interface 2234) to the RRH 2220.

The RRH 2220 includes a connection interface 2223 and a wireless communication interface 2221.

The connection interface 2223 is an interface for connecting the RRH 2220 (wireless communication interface 2221) to the base station device 2230. The connection interface 2223 may also be a communication module used for communication in the above high-speed line.

The wireless communication interface 2221 transmits and receives wireless signals via the antenna 2210. Wireless communication interface 2221 may generally include RF circuitry 2222, for example. The RF circuit 2222 may include, for example, a mixer, a filter, and an amplifier, and transmits and receives wireless signals via the antenna 2210. Although FIG. 8 shows an example in which one RF circuit 2222 is connected to one antenna 2210, the present disclosure is not limited to this illustration, instead one RF circuit 2222 may be connected to multiple antennas 2210 at the same time.

As shown in FIG. 8, the wireless communication interface 2221 may include multiple RF circuits 2222. For example, the multiple RF circuits 2222 may support multiple antenna elements. Although FIG. 8 illustrates an example in which the wireless communication interface 2221 includes multiple RF circuits 2222, the wireless communication interface 2221 may also include a single RF circuit 2222.

### Examples of user device/terminal device

### First example

FIG. 9 is a block diagram illustrating an example of a schematic configuration of a communication device 2300 (e.g., a smart phone, a communicator, etc.) to which the techniques of the present disclosure may be applied. The communication device 2300 includes a processor 2301, a memory 2302, a storage apparatus 2303, an external connection interface 2304, a camera apparatus 2306, a sensor 2307, a microphone 2308, an input apparatus 2309, a display apparatus 2310, a speaker 2311, a wireless communication interface 2312, one or more antenna switches 2315, one or more antennas 2316, a bus 2317, a battery 2318, and an auxiliary controller 2319. In one implementation, the communication device 2300 (or the processor 2301) here may correspond to the above transmitting device or electronic device on the terminal side.

The processor 2301 may be, for example, a CPU or a system on chip (SoC), and controls functions of an application layer and other layers of the communication device 2300. The memory 2302 includes RAM and ROM, and stores data and programs executed by the processor 2301. The storage apparatus 2303 may include a storage medium such as a semiconductor memory and a hard disk. The external connection interface 2304 is an interface for connecting an external apparatus (such as a memory card and a universal serial bus (USB) apparatus) to the communication device 2300.

The camera apparatus 2306 includes an image sensor (such as a charge coupled device (CCD) and a complementary metal oxide semiconductor (CMOS)), and generates a captured image. Sensors 2307 may include a set of sensors such as measurement sensors, gyro sensors, geomagnetic sensors, and acceleration sensors. The microphone 2308 converts sound input to the communication device 2300 into an audio signal. The input apparatus 2309 includes, for example, a touch sensor configured to detect a touch on the screen of the display apparatus 2310, a keypad, a keyboard, buttons, or switches, and receives operations or information input from a user. The display apparatus 2310 includes a screen (such as a Liquid Crystal Display (LCD) and an Organic Light Emitting Diode (OLED) display), and displays an image output by the communication device 2300. The speaker 2311 converts an audio signal output from the communication device 2300 into sound.

The wireless communication interface 2312 supports any cellular communication scheme (such as LTE and LTE-Advanced), and performs wireless communication. The wireless communication interface 2312 may generally include, for example, a BB processor 2313 and an RF circuit 2314. The BB processor 2313 may perform, for example, encoding/decoding, modulation/demodulation, and multiplexing/demultiplexing, and perform various types of signal processing for wireless communication. Meanwhile, the RF circuit 2314 may include, for example, a mixer, a filter, and an amplifier, and transmit and receive wireless signals via the antenna 2316. The wireless communication interface 2312 may be a chip module on which a BB processor 2313 and an RF circuit 2314 are integrated. As shown in FIG. 9, the wireless communication interface 2312 may include multiple BB processors 2313 and multiple RF circuits 2314. Although FIG. 9 shows an example in which the wireless communication interface 2312 includes multiple BB processors 2313 and multiple RF circuits 2314, the wireless communication interface 2312 may also include a single BB processor 2313 or a single RF circuit 2314.

In addition, the wireless communication interface 2312 may support another type of wireless communication scheme, such as a short-range wireless communication scheme, a near field communication scheme, and a wireless local area network (LAN) scheme, in addition to the cellular communication scheme. In this case, the wireless communication interface 2312 may include a BB processor 2313 and an RF circuit 2314 for each wireless communication scheme.

Each of the antenna switches 2315 switches the connection destination of the antenna 2316 among multiple circuits included in the wireless communication interface 2312 (e.g., circuits for different wireless communication schemes).

Each of the antennas 2316 includes a single or multiple antenna elements (such as multiple antenna elements included in a MIMO antenna), and is used for the wireless communication interface 2312 to transmit and receive wireless signals. As shown in FIG. 9, the communication device 2300 may include multiple antennas 2316. Although FIG. 9 illustrates an example in which the communication device 2300 includes multiple antennas 2316, the communication device 2300 may also include a single antenna 2316.

In addition, the communication device 2300 may include an antenna 2316 for each wireless communication scheme. In this case, the antenna switch 2315 may be omitted from the configuration of the communication device 2300.

The bus 2317 connects the processor 2301, memory 2302, storage apparatus 2303, external connection interface 2304, camera apparatus 2306, sensor 2307, microphone 2308, input apparatus 2309, display apparatus 2310, speaker 2311, wireless communication interface 2312, and auxiliary controller 2319 to each other. The battery 2318 provides power to the various blocks of the communication device 2300 shown in FIG. 9 via feed lines, which are partially shown as dashed lines in the figure. The auxiliary controller 2319 operates the minimum necessary functions of the communication device 2300 in sleep mode, for example.

### Second example

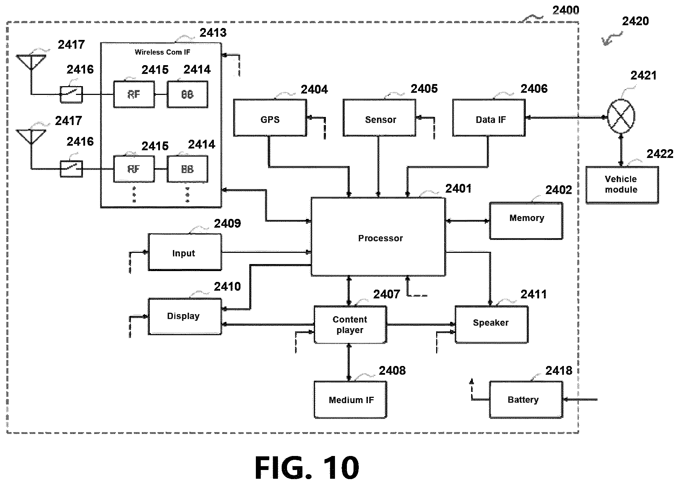

FIG. 10 is a block diagram illustrating an example of a schematic configuration of a vehicle navigation device 2400 to which the technology of the present disclosure may be applied. The vehicle navigation device 2400 includes a processor 2401, a memory 2402, a global positioning system (GPS) module 2404, a sensor 2405, a data interface 2406, a content player 2407, a storage medium interface 2408, an input apparatus 2409, a display apparatus 2510, a speaker 2411, a wireless communication interface 2413, one or more antenna switches 2416, one or more antennas 2417, and a battery 2418. In one implementation, the vehicle navigation device 2400 (or the processor 2401) here may correspond to a transmitting device or a terminal-side electronic device.

The processor 2401 may be, for example, a CPU or a SoC, and controls the navigation function and other functions of the vehicle navigation device 2400. The memory 2402 includes RAM and ROM, and stores data and programs executed by the processor 2401.

The GPS module 2404 measures the location (such as latitude, longitude, and altitude) of the vehicle navigation device 2400 using GPS signals received from GPS satellites. The sensors 2405 may include a set of sensors such as gyroscopic sensors, geomagnetic sensors, and air pressure sensors. The data interface 2406 is connected to, for example, the in-vehicle network 2421 via a terminal not shown, and acquires data generated by the vehicle (such as vehicle speed data).

The content player 2407 reproduces content stored in a storage medium (such as CD and DVD), which is inserted into the storage medium interface 2408. The input apparatus 2409 includes, for example, a touch sensor configured to detect a touch on the screen of the display apparatus 2510, a button, or a switch, and receives an operation or information input from a user. The display apparatus 2510 includes a screen such as an LCD or OLED display, and displays an image of a navigation function or reproduced content. The speaker 2411 outputs sound of a navigation function or reproduced content.

The wireless communication interface 2413 supports any cellular communication scheme such as LTE and LTE-Advanced, and performs wireless communication. The wireless communication interface 2413 may generally include, for example, a BB processor 2414 and an RF circuit 2415. The BB processor 2414 may perform, for example, encoding/decoding, modulation/demodulation, and multiplexing/demultiplexing, and perform various types of signal processing for wireless communication. Meanwhile, the RF circuit 2415 may include, for example, a mixer, a filter, and an amplifier, and transmit and receive wireless signals via the antenna 2417. The wireless communication interface 2413 may also be a chip module on which the BB processor 2414 and the RF circuit 2415 are integrated. As shown in FIG. 10, the wireless communication interface 2413 may include multiple BB processors 2414 and multiple RF circuits 2415. Although FIG. 10 illustrates an example in which the wireless communication interface 2413 includes multiple BB processors 2414 and multiple RF circuits 2415, the wireless communication interface 2413 may also include a single BB processor 2414 or a single RF circuit 2415.

In addition, the wireless communication interface 2413 may support another type of wireless communication scheme, such as a short-distance wireless communication scheme, a near field communication scheme, and a wireless LAN scheme, in addition to the cellular communication scheme. In this case, the wireless communication interface 2413 may include a BB processor 2414 and an RF circuit 2415 for each wireless communication scheme.

Each of the antenna switches 2416 switches the connection destination of the antenna 2417 among multiple circuits included in the wireless communication interface 2413 (such as circuits for different wireless communication schemes).

Each of the antennas 2417 includes a single or multiple antenna elements (such as multiple antenna elements included in a MIMO antenna), and is used for the wireless communication interface 2413 to transmit and receive wireless signals. As shown in FIG. 10, the vehicle navigation device 2400 may include multiple antennas 2417. Although FIG. 10 illustrates an example in which the vehicle navigation device 2400 includes multiple antennas 2417, the vehicle navigation device 2400 may also include a single antenna 2417.

In addition, the vehicle navigation device 2400 may include an antenna 2417 for each wireless communication scheme. In this case, the antenna switch 2416 may be omitted from the configuration of the vehicle navigation device 2400.

The battery 2418 provides power to various blocks of the vehicle navigation device 2400 shown in FIG. 10 via feeder lines, which are partially shown as dotted lines in the figure. The battery 2418 accumulates electric power supplied from the vehicle.

The technology of the present disclosure may also be implemented as an in-vehicle system (or vehicle) 2420 including one or more blocks in a vehicle navigation device 2400, an in-vehicle network 2421, and a vehicle module 2422. The vehicle module 2422 generates vehicle data (such as vehicle speed, engine speed, and breakdown information), and outputs the generated data to the in-vehicle network 2421.

The exemplary embodiments of the present disclosure are described above with reference to the accompanying drawings, but the present disclosure is of course not limited to the above examples. A person skilled in the art may find various alterations and modifications within the scope of the appended claims, and it should be understood that they will naturally come under the technical scope of the present disclosure.

It should be understood that the machine-readable storage medium or the machine-executable instructions in the program product according to the embodiments of the present disclosure may be configured to perform operations corresponding to the above device and method embodiments. When referring to the above device and method embodiments, the embodiments of the machine-readable storage medium or the program product will be obvious to those skilled in the art, so the description will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of implemented by software and/or firmware, respective programs constituting the respective software are stored in the storage medium of the related device, and various functions may be performed when the programs are executed.

For example, multiple functions included in one unit in the above embodiments may be implemented by separate apparatus. Alternatively, multiple functions implemented by multiple units in the above embodiments may be respectively implemented by separate apparatus. In addition, one of the above functions may be realized by multiple units. Needless to say, such a configuration is included in the technical scope of the present disclosure.

In this specification, the steps described in the flowcharts include not only processing performed in time series in the stated order but also processing performed in parallel or individually and not necessarily in time series. Furthermore, even in the steps processed in time series, needless to say, the order may be appropriately changed.

### 4. EXEMPLARY EMBODIMENTS OF THE PRESENT DISCLOSURE

According to the embodiments of the present disclosure, various exemplary implementations for realizing the concepts of the present disclosure may be conceived, including but not limited to the following embodiments:
1. An electronic device used at network side, comprising:
   processing circuitry, configured to:
   indicate a first transmission configuration indication (TCI) state for a first signal transmission that is associated with a transmission and reception point (TRP); and
   indicate a second TCI state for a second signal transmission that is associated with the TRP;
   wherein the first signal transmission and the second signal transmission have different signal types or experience different channel conditions, and
   wherein the first TCI state is different from the second TCI state.
2. The electronic device according to embodiment 1, wherein:
   the first signal transmission is a downlink control signal transmission, and the second signal transmission is one of the following that is associated with the downlink control signal transmission:
   a data signal transmission; or
   a pilot signal transmission.
3. The electronic device according to embodiment 2, wherein the data signal transmission is one of the following that is associated with the downlink control signal transmission:
   a downlink data signal transmission; or
   an uplink data signal transmission.
4. The electronic device according to embodiment 2, wherein the pilot signal transmission is one of the following that is associated with the downlink control signal transmission:
   a downlink aperiodic pilot signal transmission; or
   an uplink aperiodic pilot signal transmission.
5. The electronic device according to embodiment 3, wherein:
   the first TCI state is associated with a first pair of beams; and
   the second TCI state is associated with a second pair of beams; and
   wherein the second pair of beams has a smaller width than the first pair of beams.
6. The electronic device according to embodiment 3, wherein:
   a scheduling gap between the first signal transmission and the second signal transmission is greater than a predetermined time threshold.
7. The electronic device according to embodiment 2, wherein the processing circuitry is further configured to:
   indicate a third TCI state for a third signal transmission that is associated with the TRP; and
   wherein the third TCI state is different from the first TCI state and the second TCI state.
8. The electronic device according to embodiment 7, wherein:
   the second signal transmission is a downlink data signal transmission associated with the downlink control signal transmission, and
   the third signal transmission is an uplink control signal transmission that is associated with the downlink data signal transmission, and the uplink control signal transmission comprises feedback information associated with the downlink data signal transmission.
9. The electronic device according to embodiment 7, wherein:
   the second signal transmission is a downlink aperiodic pilot signal transmission that is associated with the downlink control signal transmission; and
   the third signal transmission is an uplink aperiodic pilot signal transmission that is associated with the downlink control signal transmission.
10. The electronic device according to embodiment 1, wherein the first signal transmission and the second signal transmission are used to perform spatial diversity transmission of a downlink control signal, the spatial diversity transmission comprising a plurality of downlink control signal transmissions, the plurality of downlink control signal transmissions corresponding to a plurality of beams that are different from each other, the plurality of downlink control signal transmissions carrying same CORESET information, the plurality of downlink control signal transmissions comprising the first signal transmission and the second signal transmission.
11. The electronic device according to embodiment 10, wherein the processing circuitry is further configured to:
   determine, for a downlink data signal transmission or a downlink pilot signal transmission associated with the downlink control signal, a default beam for the downlink data signal transmission or for the downlink pilot signal transmission, based on one of:
   a first configuration, in which the default beam is determined as a beam with an activated TCI state that has a smallest identifier (ID) among the plurality of beams; or
   a second configuration, in which signaling for scheduling the plurality of beams comprises information for specifying the default beam.
12. The electronic device according to embodiment 10, wherein the processing circuitry is further configured to:
   determine, based on capabilities of a user equipment (UE), a group of TCI states that the UE is able to process simultaneously; and
   apply at least a subset of the group of TCI states to the spatial diversity transmission of the downlink control signal.
13. The electronic device according to embodiment 1, wherein the first signal transmission and the second signal transmission are used to perform data channel spatial multiplexing of a downlink data signal, the data channel spatial multiplexing comprising performing a plurality of downlink data signal transmissions using a plurality of spatial layers, the plurality of downlink data signal transmissions corresponding to a plurality of beams that are different from each other, the plurality of downlink data signal transmissions comprising the first signal transmission and the second signal transmission.
14. The electronic device according to embodiment 1, wherein:
   the TRP comprises at least a first TRP and a second TRP, and
   the second signal transmission comprises a first transmission of a specific type associated with the first TRP and a second transmission of the specific type associated with the second TRP.
15. The electronic device according to embodiment 14, wherein the processing circuitry is further configured to:
   determine, based at least in part on quality of a backhaul link between the first TRP and the second TRP, whether the first signal transmission is transmitted solely by one of the first TRP or the second TRP.
16. The electronic device according to embodiment 15, wherein:
   the first signal transmission is a single downlink control signal transmission transmitted solely by one of the first TRP or the second TRP, the single downlink control signal transmission scheduling both of the first transmission of the specific type and the second transmission of the specific type, and
   wherein the processing circuitry is configured to indicate different TCI states for the first signal transmission, the first transmission of the specific type, and the second transmission of the specific type, respectively.
17. The electronic device according to embodiment 15, wherein:
   the first signal transmission comprises a plurality of downlink control signal transmissions, the plurality of downlink control signal transmissions comprising a first downlink control signal transmission associated with the first TRP and a second downlink control signal transmission associated with the second TRP,
   the first downlink control signal transmission schedules the first transmission of the specific type, and
   the second downlink control signal transmission schedules the second transmission of the specific type, and
   wherein the processing circuitry is configured to indicate different TCI states for the first downlink control signal transmission, the second downlink control signal transmission, the first transmission of the specific type, and the second transmission of the specific type, respectively.
18. The electronic device according to embodiment 14, wherein the second signal transmission is one of the following that is associated with the downlink control signal transmission:
   a downlink data signal transmission;
   a downlink aperiodic pilot signal transmission;
   an uplink data signal transmission; or
   an uplink aperiodic pilot signal transmission.
19. The electronic device according to embodiment 14, wherein the processing circuitry is further configured to:
   indicate a third TCI state for a third signal transmission that is associated with the TRP; and
   wherein the third TCI state is different from the TCI state for the first signal transmission and the TCI state for the second signal transmission.
20. The electronic device according to embodiment 19, wherein:
   the third signal transmission comprises a single uplink control signal transmission associated with the first TRP, the single uplink control signal transmission comprising feedback information associated with both of the first transmission of the specific type and the second transmission of the specific type, and
   wherein the processing circuitry is configured to indicate different TCI states for the first signal transmission, the first transmission of the specific type, the second transmission of the specific type, and the third signal transmission.
21. The electronic device according to embodiment 19, wherein:
   the third signal transmission comprises a first uplink control signal transmission associated with the first TRP and a second uplink control signal transmission associated with the second TRP,
   the first uplink control signal transmission comprises first feedback information associated with the first transmission of the specific type, and
   the second uplink control signal transmission comprises second feedback information associated with the second transmission of the specific type; and
   wherein the processing circuitry is configured to indicate different TCI states for the first signal transmission, the second signal transmission, the first uplink control signal transmission, and the second uplink control signal transmission.
22. A method performed at network side of a wireless communication system, the method comprising:
   indicating a first transmission configuration indication (TCI) state for a first signal transmission that is associated with a transmission and reception point (TRP);
   indicating a second TCI state for a second signal transmission that is associated with the TRP;
   wherein the first signal transmission and the second signal transmission have different signal types or different channels,
   wherein the first TCI state is different from the second TCI state.
23. A computer program product comprising a computer program which, when executed by a computer, causes the computer to perform the method according to embodiment 22.
24. A non-transitory computer-readable storage medium having computer program instructions stored thereon, which, when executed by one or more processors, cause the one or more processors to perform the method according to embodiment 22.
25. An apparatus comprising means for performing the method according to embodiment 22.

## Claims

1. An electronic device used at network side, comprising:
processing circuitry, configured to:
indicate a first transmission configuration indication (TCI) state for a first signal transmission that is associated with a transmission and reception point (TRP); and
indicate a second TCI state for a second signal transmission that is associated with the TRP;
wherein the first signal transmission and the second signal transmission have different signal types or experience different channel conditions, and
wherein the first TCI state is different from the second TCI state.

2. The electronic device according to claim 1, wherein:
the first signal transmission is a downlink control signal transmission, and the second signal transmission is one of the following that is associated with the downlink control signal transmission:
a data signal transmission; or
a pilot signal transmission.

3. The electronic device according to claim 2, wherein the data signal transmission is one of the following that is associated with the downlink control signal transmission:
a downlink data signal transmission; or
an uplink data signal transmission.

4. The electronic device according to claim 2, wherein the pilot signal transmission is one of the following that is associated with the downlink control signal transmission:
a downlink aperiodic pilot signal transmission; or
an uplink aperiodic pilot signal transmission.

5. The electronic device according to claim 3, wherein:
the first TCI state is associated with a first pair of beams; and
the second TCI state is associated with a second pair of beams; and
wherein the second pair of beams has a smaller width than the first pair of beams.

6. The electronic device according to claim 3, wherein:
a scheduling gap between the first signal transmission and the second signal transmission is greater than a predetermined time threshold.

7. The electronic device according to claim 2, wherein the processing circuitry is further configured to:
indicate a third TCI state for a third signal transmission that is associated with the TRP; and
wherein the third TCI state is different from the first TCI state and the second TCI state.

8. The electronic device according to claim 7, wherein:
the second signal transmission is a downlink data signal transmission associated with the downlink control signal transmission, and
the third signal transmission is an uplink control signal transmission that is associated with the downlink data signal transmission, and the uplink control signal transmission comprises feedback information associated with the downlink data signal transmission.

9. The electronic device according to claim 7, wherein:
the second signal transmission is a downlink aperiodic pilot signal transmission that is associated with the downlink control signal transmission; and
the third signal transmission is an uplink aperiodic pilot signal transmission that is associated with the downlink control signal transmission.

10. The electronic device according to claim 1, wherein the first signal transmission and the second signal transmission are used to perform spatial diversity transmission of a downlink control signal, the spatial diversity transmission comprising a plurality of downlink control signal transmissions, the plurality of downlink control signal transmissions corresponding to a plurality of beams that are different from each other, the plurality of downlink control signal transmissions carrying same CORESET information, the plurality of downlink control signal transmissions comprising the first signal transmission and the second signal transmission.

11. The electronic device according to claim 10, wherein the processing circuitry is further configured to:
determine, for a downlink data signal transmission or a downlink pilot signal transmission associated with the downlink control signal, a default beam for the downlink data signal transmission or for the downlink pilot signal transmission, based on one of:
a first configuration, in which the default beam is determined as a beam with an activated TCI state that has a smallest identifier (ID) among the plurality of beams; or
a second configuration, in which signaling for scheduling the plurality of beams comprises information for specifying the default beam.

12. The electronic device according to claim 10, wherein the processing circuitry is further configured to:
determine, based on capabilities of a user equipment (UE), a group of TCI states that the UE is able to process simultaneously; and
apply at least a subset of the group of TCI states to the spatial diversity transmission of the downlink control signal.

13. The electronic device according to claim 1, wherein the first signal transmission and the second signal transmission are used to perform data channel spatial multiplexing of a downlink data signal, the data channel spatial multiplexing comprising performing a plurality of downlink data signal transmissions using a plurality of spatial layers, the plurality of downlink data signal transmissions corresponding to a plurality of beams that are different from each other, the plurality of downlink data signal transmissions comprising the first signal transmission and the second signal transmission.

14. The electronic device according to claim 1, wherein:
the TRP comprises at least a first TRP and a second TRP, and
the second signal transmission comprises a first transmission of a specific type associated with the first TRP and a second transmission of the specific type associated with the second TRP.

15. The electronic device according to claim 14, wherein the processing circuitry is further configured to:
determine, based at least in part on quality of a backhaul link between the first TRP and the second TRP, whether the first signal transmission is transmitted solely by one of the first TRP or the second TRP.

16. The electronic device according to claim 15, wherein:
the first signal transmission is a single downlink control signal transmission transmitted solely by one of the first TRP or the second TRP, the single downlink control signal transmission scheduling both of the first transmission of the specific type and the second transmission of the specific type, and
wherein the processing circuitry is configured to indicate different TCI states for the first signal transmission, the first transmission of the specific type, and the second transmission of the specific type, respectively.

17. The electronic device according to claim 15, wherein:
the first signal transmission comprises a plurality of downlink control signal transmissions, the plurality of downlink control signal transmissions comprising a first downlink control signal transmission associated with the first TRP and a second downlink control signal transmission associated with the second TRP,
the first downlink control signal transmission schedules the first transmission of the specific type, and
the second downlink control signal transmission schedules the second transmission of the specific type, and
wherein the processing circuitry is configured to indicate different TCI states for the first downlink control signal transmission, the second downlink control signal transmission, the first transmission of the specific type, and the second transmission of the specific type, respectively.

18. The electronic device according to claim 14, wherein the second signal transmission is one of the following that is associated with the downlink control signal transmission:
a downlink data signal transmission;
a downlink aperiodic pilot signal transmission;
an uplink data signal transmission; or
an uplink aperiodic pilot signal transmission.

19. The electronic device according to claim 14, wherein the processing circuitry is further configured to:
indicate a third TCI state for a third signal transmission that is associated with the TRP; and
wherein the third TCI state is different from the TCI state for the first signal transmission and the TCI state for the second signal transmission.

20. The electronic device according to claim 19, wherein:
the third signal transmission comprises a single uplink control signal transmission associated with the first TRP, the single uplink control signal transmission comprising feedback information associated with both of the first transmission of the specific type and the second transmission of the specific type, and
wherein the processing circuitry is configured to indicate different TCI states for the first signal transmission, the first transmission of the specific type, the second transmission of the specific type, and the third signal transmission.

21. The electronic device according to claim 19, wherein:
the third signal transmission comprises a first uplink control signal transmission associated with the first TRP and a second uplink control signal transmission associated with the second TRP,
the first uplink control signal transmission comprises first feedback information associated with the first transmission of the specific type, and
the second uplink control signal transmission comprises second feedback information associated with the second transmission of the specific type; and
wherein the processing circuitry is configured to indicate different TCI states for the first signal transmission, the second signal transmission, the first uplink control signal transmission, and the second uplink control signal transmission.

22. A method performed at network side of a wireless communication system, the method comprising:
indicating a first transmission configuration indication (TCI) state for a first signal transmission that is associated with a transmission and reception point (TRP);
indicating a second TCI state for a second signal transmission that is associated with the TRP;
wherein the first signal transmission and the second signal transmission have different signal types or different channels,
wherein the first TCI state is different from the second TCI state.

23. A computer program product comprising a computer program which, when executed by a computer, causes the computer to perform the method according to claim 22.

24. A non-transitory computer-readable storage medium having computer program instructions stored thereon, which, when executed by one or more processors, cause the one or more processors to perform the method according to claim 22.

25. An apparatus comprising means for performing the method according to claim 22.
